(19) Europäisches Patentamt
European Patent Office
Office européen des brevets

(11) EP 2 079 613 B1

(12) **EUROPEAN PATENT SPECIFICATION**

(45) Date of publication and mention
of the grant of the patent:
**22.09.2010 Bulletin 2010/38**

(21) Application number: **07826830.7**

(22) Date of filing: **23.10.2007**

(51) Int Cl.:
***B60R 21/0132*** *(2006.01)* ***B60R 21/00*** *(2006.01)*

(86) International application number:
**PCT/IB2007/054299**

(87) International publication number:
**WO 2008/050290 (02.05.2008 Gazette 2008/18)**

(54) **METHOD AND DEVICE FOR THE PREDICTION OF A FALL OF A PERSON FROM A VEHICLE OR THE LIKE**

VERFAHREN UND VORRICHTUNG ZUR VORHERSAGE EINES FALLS EINER PERSON AUS EINEM FAHRZEUG ODER DERGLEICHEN

PROCÉDÉ ET DISPOSITIF POUR LA PRÉDICTION DE CHUTE D'UNE PERSONNE D'UN VÉHICULE OU ANALOGUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **23.10.2006 IT RM20060571**

(43) Date of publication of application:
**22.07.2009 Bulletin 2009/30**

(73) Proprietor: **Dainese S.p.A.**
**36060 Molvena (IT)**

(72) Inventors:
• **AMBROGI, Andrea**
**36060 Molvena Vi (IT)**
• **BELLATI, Alessandro**
**36060 Molvena Vi (IT)**

• **COSSALTER, Vittore**
**36060 Molvena Vi (IT)**
• **LOT, Roberto**
**36060 Molvena Vi (IT)**

(74) Representative: **Manfrin, Marta et al**
**Società Italiana Brevetti S.p.A.**
**Stradone San Fermo 21 sc. B**
**37121 Verona (VR) (IT)**

(56) References cited:
**EP-A- 1 236 620        WO-A-01/81128**
**WO-A-2005/030536     DE-A1- 10 316 766**
**US-A- 6 032 299         US-A1- 2003 163 282**
**US-A1- 2003 182 040   US-A1- 2004 004 488**
**US-A1- 2004 183 283   US-A1- 2005 080 544**
**US-A1- 2006 095 181**

**Description**

The present invention relates to a method and to a device for the prediction of a fall of a person from a vehicle or the like, in particular for estimating the imminence of the fall in case of a motorcycle driver, and this with the aim of activating a corresponding safety system.

In the motorcycling field, for obvious reasons the drivers' falls tend potentially to produce serious injuries. Apart from the road driving, such problem is felt especially in the field of the sports races.

In order to try to solve such important problem, during the past years dedicated systems have been developed to reduce damages and the effects of falls on the drivers. These systems typically activate automatically upon the fall, and consist for example in airbags associated to the driver suits.

However, in order to be applicable and above all be effective, such dedicated systems must be activated preferably before the driver touches the ground and/or impacts onto the motorbike and/or starts a sliding onto the ground. Therefore, these systems require a timely identification of the fall event, and rather a reliable prediction thereof. As method according to the preamble of claim 1 is shown in DE 103 16 766 A.

Same needs for the prediction of the fall with the aim of protecting the person are found also in other sporting activities, such as for example cycling, riding, skiing, etc. Therefore, the technical problem to be solved by the present invention is to provide a method and a device for the prediction of the fall of a person during sporting.

Such a problem is solved by a method according to claim 1, and according to the same inventive concept, the present invention also relates to a device according to claim 13 and to a device according to claim 15. Preferred features of the present invention are described in the depending claims. The present invention provides some important advantages.

The main advantage lies in that the method of the invention provides a reliable and instantaneous prediction of the fall, thus allowing the timely activation of dedicated safety systems.

The proposed method further provides a great computational effectiveness and a considerable implementing simplicity with respect to performances.

Other advantages, features and applications of the present invention will be made evident in the following detailed description of some embodiments thereof, shown by way of example and not for limitative purposes, with reference to the annexed drawings, wherein:

-    Figure 1 shows a flow chart illustrating the main steps of a preferred embodiment of the method for the prediction of the fall of a person from a vehicle or the like, according to the present invention; and
-    Figure 2 and Figure 3 show respectively a graph exemplifying the modes for evaluating the risk of fall of the method of figure 1.

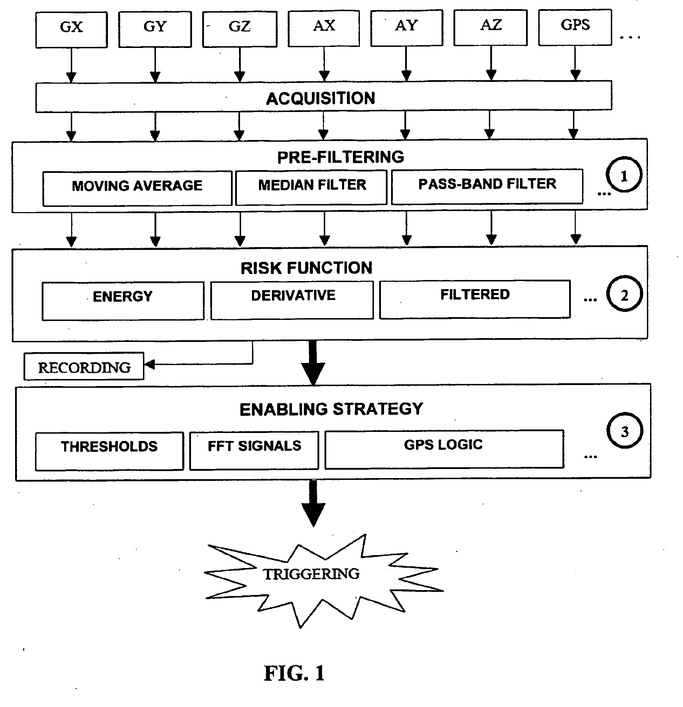

Referring now to Figure 1, there is shown a preferred embodiment of the method for the prediction of a fall according of the present invention. The method first of all involves the acquisition of the rolling, pitching, and yawing components of the angular velocity of the person's body according to the axes of a Cartesian reference system (X, Y, Z), which components are designated with GX, GY and GZ in Figure 1, respectively.

Preferably, the method further provides the acquisition of the components of linear acceleration AX, AY and AZ of the person's body in the same reference system mentioned above.

In case the invention is applied to the motorcycling field, such velocity and acceleration components are acquired during the running of a motorcycle by means of a dedicated device mounted onto the person's body (whether he/she is a driver or a passenger of the motorcycle itself), and preferably applied onto or incorporated into the aerodynamic appendix usually provided in the suits for competition races. Such device, in the present example, comprises three rate gyros (apt to measure said angular velocity) and three accelerometers (apt to measure said linear acceleration). Embodiment versions can also provide the acquisition of a lower number of components of the angular velocity and/or of the linear acceleration.

In the present example, the above-mentioned Cartesian reference system (X, Y, Z) is then meant to be integral to the person's body and it is so that, during the usual running of the vehicle, the axis Z of the system is associated to the gravitational direction, the axis X to the advancing direction and the axis Y is defined consequently.

Alternatively, said device comprising a plurality of rate gyros and accelerometers can be integral to the vehicle instead of to the person; in this case the above-mentioned Cartesian reference system (X, Y, Z) is to be meant integral to the vehicle and the components of angular velocity GX, GY and GZ and of linear acceleration AX, AY and AZ are related to the vehicle motion.

The so acquired velocity and acceleration signals are digitalized with a sampling rate preferably comprised between 400 Hz and 1200 Hz and with a resolution preferably comprised between 10 and 16 bit.

Then the signals undergo a pre-filtering step which can be based upon a low-pass filtering, upon a median-filter filtering, upon a moving average filtering or upon a combination or association of such techniques. Based upon a preferred embodiment, a moving average filtering is used since it is able to optimize the reduction of the white noise in the signals of interest for the present application.

The pre-filtering step is important as it lowers the risk of false predictions without damaging the timeliness of the prediction itself. Said pre-filtering step can be carried out by a suitable hardware device or by means of a software.

The acquired signals of angular velocity GX, GY and GZ are then used to calculate a risk index, meant as instantaneous value of a risk function and representing the probability of falling of a person and/or of losing the control of the vehicle. The above-mentioned risk function is susceptible of different embodiment variants, as illustrated hereinafter.

Based upon a first variant the risk function, re-calculated for each signal acquisition, comprises at least one term associated to the kinetic energy of the person (or, alternatively, of the vehicle), and in particular a linear combination of the square of at least two of the acquired components of angular velocity. In the present example such energy risk function is of the type:

$$RISK = RISK_{ene} = \left( \sqrt{w_{gx\_ene} \cdot GX^2 + w_{gy\_ene} \cdot GY^2 + w_{gz\_ene} \cdot GZ^2} \right),$$

wherein RISK designates the risk function, $RISK_{ene}$ denotes said energy term of the risk function, GX, GY and GZ denote, as said above, the components of angular velocity and $w_{gx\_ene}$, $w_{gy\_ene}$ and $w_{gz\_ene}$ denote the respective weights in the linear combination, which weights will be determined during the device calibration phase and they can assume different values depending on the application modes of the device (for example "competitive" mode or "driving on road" mode).

The *ratio* implied by this first implementation of the risk function is that an imminent fall produces a discontinuity in the rotational kinetic energy, with respect to the translational one.

Based upon a second variant, the risk function provides the application of a median filter (or a moving average filter) to a term associated to a linear combination of the square of at least two of the components of the person's angular velocity. In greater detail, the application of said median filter consists in selecting the median value of a series, ordered for example in ascending order, of values of said term, said values corresponding to a prearranged number of successive acquisitions of said signals. On the contrary, in the present example the use of a moving average filter is provided, that is the calculation of an average value (*medfilt*) of said term with respect to a prearranged number (Nputs) of successive acquisitions of said signals is provided; therefore, such filtered risk function is of the type:

$$RISK = RISK_{med} = medfilt_{Nputs} \left( \sqrt{w_{gx\_med} \cdot GX^2 + w_{gy\_med} \cdot GY^2 + w_{gz\_med} \cdot GZ^2} \right),$$

wherein RISK still designates the risk function, $RISK_{med}$ denotes said filtered term of the risk function, GX, GY and GZ denote as usual the acquired components of angular velocity and $w_{gx\_med}$, $w_{gy\_med}$ and $w_{gz\_med}$ the respective weights in the linear combination.

This variant of the risk function allows to eliminate impulsive peaks associated to signal artifices. Said median filter and moving average filter are obviously subjected to possible further modifications and improvements with respect to what described above with the purpose of improving the effectiveness and precision thereof, such modifications and improvements being however referable to the same inventive core. Based upon a third variant, the risk function comprises a term constituted by a linear combination of the square of the derivative with respect to time of at least two of the acquired components of angular velocity. In the present example such derivative risk function is then of the type:

$$RISK = RISK_{dot} = \left( \sqrt{w_{gx\_dot} \cdot (GX_{dot})^2 + w_{gy\_dot} \cdot (GY_{dot})^2 + w_{gz\_dot} \cdot (GZ_{dot})^2} \right),$$

wherein RISK still designates the risk function, $RISK_{dot}$ designates said derivative term of the risk function, each one of $GX_{dot}$, $GY_{dot}$ and $GZ_{dot}$ denotes the derivative with respect to time of a respective component of angular velocity and $w_{gx\_dot}$, $w_{gy\_dot}$ and $w_{gz\_dot}$ denote the respective weights in the linear combination.

The above-mentioned derivatives can be calculated by means of a known approximation system, of first order or higher order. As in the case of the above-mentioned second variant of the risk function, the application of a median filter or of a narrow-band filter with dynamic window can be provided in order to remove possible peak values (spike) due to signal artifices.

The above-mentioned three variants of the risk function can be used as alternatives, for example depending on the application type (different grounds, competitive race or driving on road surfaces and so on) or even in combination, in case in association with a Boolean logic for activating the safety systems. Evidently, the risk function can be also any convenient function of one or more of said energy, filtered and derivative terms; each one of said terms could further have a mathematical formulation different from the ones shown above by way of example, even if by keeping the same basic functional principle.

Of course, the risk function is computed for each acquisition instant, and the time progress and the instantaneous value thereof are used to determine the emission of an enabling signal (designated with "triggering") for said safety systems. Also for the emission of such enabling signal different procedures can be used, as illustrated hereinafter.

Based upon a first procedure, the instantaneous value of the risk function is compared to a prearranged threshold value and, if equal or higher than such threshold, it determines the activation of said enabling signal.

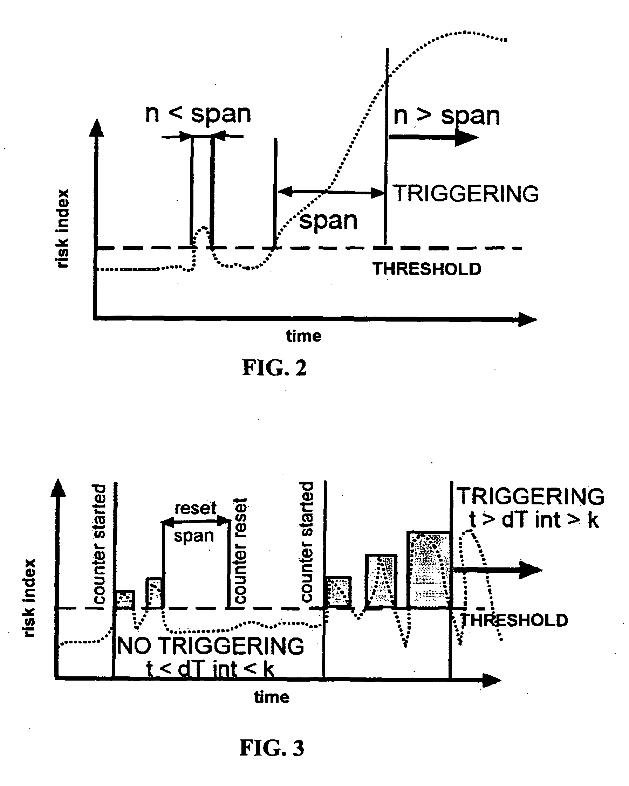

Based upon a more "precautionary" procedure and suitable for more "critical" applications, the enabling signal is emitted only in case that said threshold value is exceeded consecutively for a certain prearranged number of acquisition instants, that is in conclusion for a certain continuative period of time. Such situation is exemplified in Figure 2, wherein "n" denotes a certain number of acquisition instants and "span" the above-mentioned prearranged number. Such procedure allows avoiding to enable the safety systems in case of small signal disturbances due to artifices and not to an imminent fall.

A third procedure, optimized for the applications wherein major accelerations and fluctuations thereof are possible (for example in the field of the competitive races), is exemplified in Figure 3. In such case, upon exceeding said prearranged threshold value by the risk index, the counting of a time range is activated and the counting continues even if said risk index value falls then below the prearranged threshold. The counting is interrupted only if the risk index value keeps below the prearranged threshold for a prearranged period of time (the latter designated with "span" in Figure 3). If this does not take place, the counting continues and, upon reaching a second prearranged period (the latter designated with "k" in Figure 3), the enabling signal is activated.

Based upon an additional improvement of such logic, it is possible to consider also the time period ("t" in Figure 3) for which the risk index value keeps continuatively higher than said prearranged threshold, by providing the counting interruption if such period is lower than a prearranged value ("dT" in Figure 3) in one or more successive exceeding of the above-mentioned threshold.

Preferably, the enabling signal is generated also by considering additional data and this in order to make stronger the enabling logic. In particular, in case said device is mounted onto the person's body, the signals acquired by the linear accelerometers and those derived from possible satellite signals, such for example the signals of the "Global Positioning System" (GPS), can be used to discriminate situations wherein the person is not onto a motorcycle saddle, but for example he/she is going up the stairs or running on foot; therefore, a specific GPS sensor will be in case provided. In such embodiment, the method of the invention allows to discriminate fall events with a system wholly associated to the person and independent from the motorcycle.

As illustrated in Figure 1, a frequency analysis of the linear acceleration signal can be also performed (for example a Fast Fourier Transformation, designated in Figure 1 with FFT) in order to exclude the generation of an enabling signal when the motorcycle is still.

It is to be noted that the method of the invention allows generating an enabling signal both in case of a fall of the person from the vehicle and in case of an impact against an obstacle and in case the person slides onto the ground together with the motorcycle after having lost adherence.

At last, it is to be noted that the method and the device of the invention can evidently be applied in an analogous way also to other sporting activities not providing the use of a motorbike. For example, they can be used to protect a person who is using a bicycle, a pair of skis, a snowboard, a horse, etc., or he/she is performing another activity wherein there is the risk of injuries deriving from a fall.

The present invention has been insofar described by referring to preferred embodiments, but further embodiments may exist belonging to the same inventive core, all comprised within the scope of the annexed claims.

## Claims

1. Method for the prediction of the fall of a person from a vehicle or the like, comprising the steps of:

   (a) measuring at least one component of the angular velocity of the person or the vehicle or the like; and
   (b) calculating a risk index as instantaneous value of a risk function depending on said angular velocity,

   **characterised in that** said risk function comprises

   - an energy term associated to the kinetic energy of the person or of the vehicle or the like, said energy term comprising a linear combination of the square of at least two components of said angular velocity, or
- a derivative term associated to the derivative of said angular velocity, said derivative term comprising a linear combination of the square of the derivative of at least two components of said angular velocity, or
- a combination of the energy term and the derivative term.

2. Method according to claim 1, wherein said step (a) provides the measuring of the components of said angular velocity according to three mutually orthogonal axes.

3. Method according to claim 2, wherein said energy term is of the type:

$$RISK_{ene} = \left( \sqrt{w_{gx\_ene} \cdot GX^2 + w_{gy\_ene} \cdot GY^2 + w_{gz\_ene} \cdot GZ^2} \right),$$

wherein $RISK_{ene}$ denotes said energy term, GX, GY e GZ denote said components of angular velocity and $w_{gx\_ene}$, $w_{gy\_ene}$ and $w_{gz\_ene}$ denote the respective weights in the linear combination.

4. Method according to any one of the preceding claims, wherein said risk function provides the application of a median filter or a moving average filter to a term related to a linear combination of the square of at least two components of said angular velocity, said filter being applied with respect to a prearranged number of successive measures of said at least two components of said angular velocity.

5. Method according to claims 2 and 4, wherein said filtered term is of the type:

$$RISK_{med} = medfilt_{Nputs} \left( \sqrt{w_{gx\_med} \cdot GX^2 + w_{gy\_med} \cdot GY^2 + w_{gz\_med} \cdot GZ^2} \right),$$

wherein $RISK_{med}$ denotes said filtered tem, GX, GY and GZ denote said components of angular velocity and $w_{gx\_med}$, $w_{gy\_med}$ and $w_{gz\_med}$ denote the respective weights in the linear combination, *medfilt* denotes said filter and Nputs denotes said prearranged number of successive measures.

6. Method according to claim 2, wherein said derivative term is of the type:

$$RISK_{dot} = \left( \sqrt{w_{gx\_dot} \cdot (GX_{dot})^2 + w_{gy\_dot} \cdot (GY_{dot})^2 + w_{gz\_dot} \cdot (GZ_{dot})^2} \right),$$

wherein $RISK_{dot}$ denotes said derivative term, $GX_{dot}$, $GY_{dot}$ and $GZ_{dot}$ denote each one the derivative with respect to time of a respective component of angular velocity, and $w_{gx\_dot}$, $w_{gy\_dot}$ and $w_{gz\_dot}$ denote the respective weights in the linear combination.

7. Method according to claim 6, wherein said risk function provides the application of a median filter or a moving average filter to said derivative term, said filter being applied with respect to a prearranged number of successive measures of said components of said angular velocity.

8. Method according to any one of the preceding claims, providing a step of comparing the value of said risk index to a prearranged threshold.

9. Method according to claim 8 , wherein an enabling signal is emitted when an instantaneous value of said risk index equals and/or exceeds said prearranged threshold for a prearranged period of time.

10. Method according to claim 8, wherein an enabling signal is emitted when the whole period of time, for which an instantaneous value of said risk index keeps on the whole equal to and/or above said prearranged threshold, exceeds a first prearranged time threshold without said instantaneous value of risk index remaining continuatively below said prearranged threshold for a period of time greater than a second prearranged time threshold.

11. Method according to any one of the preceding claims, providing also a step of measuring at least one component of linear acceleration of the person or of the vehicle or the like.

12. Method according to any one of the preceding claims, providing, before the calculation of said risk index, a step of pre-filtering of the acquired signal(s).

13. Device for the prediction of the fall of a person from a vehicle or the like, apt to be mounted onto the body of said person and comprising:

- means for measuring at least a pair of components of angular velocity of the person according to two mutually orthogonal axes; and
- means for determining a risk index as instantaneous value of a risk function depending on said angular velocity, which means is particularly adapted to implement a method for the prediction of the fall according to any one of the claims 1 to 12.

14. Device according to claim 13, wherein said device is mounted at the aerodynamic hump of a motorcyclist's suit.

15. Device for the prediction of the fall of a person from a vehicle or the like, apt to be mounted integrally to a vehicle and comprising:

- means for measuring at least a pair of components of angular velocity of the vehicle according to two mutually orthogonal axes; and
- means for determining a risk index as instantaneous value of a risk function depending on said angular velocity, which means is particularly adapted to implement a method for the prediction of the fall according to any one of the claims 1 to 12.

16. Device according to any one of the claims 13 to 15, wherein said measuring means comprises three rate gyros apt to measure said angular velocity according to three mutually orthogonal axes.

17. Device according to any one of the claims 13 to 16, wherein said measuring means comprises at least one accelerometer apt to measure the linear acceleration of the person or the vehicle or the like.

18. Device according to claim 17, wherein said measuring means comprises three accelerometers apt to measure said linear acceleration according to three mutually orthogonal axes.

**Patentansprüche**

1. Verfahren zum Prognostizieren des Fallens einer Person von einem Fahrzeug oder dergleichen, wobei das Verfahren folgende Schritte beinhaltet:

(a) Messen von zumindest einer Komponente der Winkelgeschwindigkeit der Person oder des Fahrzeugs oder dergleichen; und
(b) Berechnen eines Risikoindex als einen Momentanwert einer Risikofunktion abhängig von der Winkelgeschwindigkeit,

**dadurch gekennzeichnet, dass** die Risikofunktion aufweist

- einen Energieterm, der der kinetischen Energie der Person oder des Fahrzeugs oder dergleichen zugeordnet ist, wobei der Energieterm eine lineare Kombination des Quadrats von zumindest zwei Komponenten der Winkelgeschwindigkeit aufweist, oder
- einen Ableitungsterm, der der Ableitung der Winkelgeschwindigkeit zugeordnet ist, wobei der Ableitungsterm eine lineare Kombination des Quadrats der Ableitung von zumindest zwei Komponenten der Winkelgeschwindigkeit aufweist, oder
- eine Kombination aus dem Energieterm und dem Ableitungsterm.

2. Verfahren nach Anspruch 1, wobei der Schritt (a) das Messen der Komponenten der Winkelgeschwindigkeit gemäß den drei zueinander orthogonalen Achsen vorsieht.

**3.** Verfahren nach Anspruch 2, wobei der Energieterm folgender Art ist:

$$\text{RISK}_{\text{ene}} = \left( \sqrt{ w_{gx\_ene} \cdot GX^2 + w_{gy\_ene} \cdot GY^2 + w_{gz\_ene} \cdot GZ^2 } \right),$$

wenn RISK$_{\text{ene}}$ den Energieterm bezeichnet, GX, GY und GZ die Komponenten der Winkelgeschwindigkeit bezeichnen und $w_{gx\_ene}$, $w_{gy\_ene}$ und $w_{gz\_ene}$ die jeweiligen Gewichtungen in der linearen Kombination bezeichnen.

**4.** Verfahren nach einem der vorhergehenden Ansprüche, wobei die Risikofunktion die Anwendung eines Medianfilters oder gleitenden Durchschnittsfilters auf einen Term vorsieht, der auf eine lineare Kombination des Quadrats der zumindest zwei Komponenten der Winkelgeschwindigkeit bezogen ist, wobei der Filter in Bezug auf eine zuvor festgelegte Anzahl von aufeinanderfolgenden Maßnahmen der zumindest zwei Komponenten der Winkelgeschwindigkeit angewendet wird.

**5.** Verfahren nach Anspruch 2 und 4, wobei der gefilterte Term folgender Art ist:

$$\text{RISK}_{\text{med}} = medfilt_{\text{Nputs}} \left( \sqrt{ w_{gx\_med} \cdot GX^2 + w_{gy\_med} \cdot GY^2 + w_{gz\_med} \cdot GZ^2 } \right),$$

wenn RISK$_{\text{med}}$ den gefilterten Term bezeichnet, GX, GY und GZ die Komponenten der Winkelgeschwindigkeit bezeichnen und $w_{gx\_med}$, $w_{gy\_med}$ und $w_{gz\_med}$ die jeweiligen Gewichtungen in der lineare Kombination bezeichnen, wobei *medfilt* den Filter bezeichnet und Nputs die zuvor festgelegte Anzahl von aufeinanderfolgenden Maßnahmen bezeichnet.

**6.** Verfahren nach Anspruch 2, wobei der Ableitungsterm folgender Art ist:

$$\text{RISK}_{\text{dot}} = \left( \sqrt{ w_{gx\_dot} \cdot (GX_{dot})^2 + w_{gy\_dot} \cdot (GY_{dot})^2 + w_{gz\_dot} \cdot (GZ_{dot})^2 } \right),$$

wenn RISK$_{\text{dot}}$ den Ableitungsterm bezeichnet, GX$_{\text{dot}}$, GY$_{\text{dot}}$ und GZ$_{\text{dot}}$ jeweils die Ableitung in Bezug auf eine Zeit einer jeweiligen Komponente einer Winkelgeschwindigkeit bezeichnet und $w_{gx\_dot}$, $w_{gy\_dot}$ und $w_{gz\_dot}$ die jeweiligen Gewichtungen in der linearen Kombination bezeichnen.

**7.** Verfahren nach Anspruch 6, wobei die Risikofunktion die Anwendung eines Medianfilters oder eines gleitenden Durchschnittsfilters auf den Ableitungsterm vorsieht, wobei der Filter in Bezug auf eine zuvor festgelegte Anzahl von aufeinanderfolgenden Maßnahmen der Komponenten der Winkelgeschwindigkeit angewendet wird.

**8.** Verfahren nach einem der vorhergehenden Ansprüche, das einen Schritt zum Vergleichen des Werts des Risikoindexes auf einen zuvor festgelegten Schwellwert vorsieht.

**9.** Verfahren nach Anspruch 8, wobei ein Freigabesignal emittiert wird, wenn ein Momentanwert des Risikoindex größer und/oder gleich dem zuvor festgelegten Schwellwert für eine zuvor festgelegte Zeitspanne ist.

**10.** Verfahren nach Anspruch 8, wobei ein Freigabesignal emittiert wird, wenn die gesamte Zeitspanne, während der ein Momentanwert des Risikoindexes den Wert beibehält, der größer und/oder gleich dem zuvor festgelegten Schwellwert ist, einen ersten zuvor festgelegten Zeitschwellwert überschreitet, ohne dass der Momentanwert des Risikoindex fortwährend den zuvor festgelegten Schwellwert während einer Zeitspanne unterschreitet, die länger als ein zweiter zuvor festgelegter Zeitschwellwert ist.

**11.** Verfahren nach einem der vorhergehenden Ansprüche, das auch einen Schritt zum Messen von zumindest einer Komponente einer Linearbeschleunigung der Person oder des Fahrzeugs oder dergleichen vorsieht.

12. Verfahren nach einem der vorhergehenden Ansprüche, das, vor der Berechnung des Risikoindex, einen Schritt zum Vorfiltern des erhaltenen Signals (der erhaltenen Signale) vorsieht.

13. Vorrichtung zum Prognostizieren des Fallens einer Person von einem Fahrzeug oder dergleichen, die dazu geeignet ist, an dem Körper der Person angebracht zu werden und die aufweist:

- eine Einrichtung zum Messen von zumindest einem Paar von Komponenten der Winkelgeschwindigkeit des Person gemäß zwei zueinander orthogonaler Achsen; und
- eine Einrichtung zum Bestimmen eines Risikoindex als einen Momentanwert einer Risikofunktion abhängig von der Winkelgeschwindigkeit, wobei die Einrichtung insbesondere dazu geeignet ist, ein Verfahren zum Prognostizieren des Fallens gemäß einem der Ansprüche 1 bis 12 zu implementieren.

14. Vorrichtung nach Anspruch 13, wobei die Vorrichtung an dem aerodynamischen Rückenhöcker des Anzugs des Motorradfahrers befestigt werden kann.

15. Vorrichtung zum Prognostizieren des Fallens einer Person von einem Fahrzeug oder dergleichen, die geeignet ist, einstückig an einem Fahrzeug angebracht zu werden und die aufweist:

- eine Einrichtung zum Messen von zumindest einem Paar von Komponenten der Winkelgeschwindigkeit des Person gemäß zwei zueinander orthogonaler Achsen; und
- eine Einrichtung zum Bestimmen eines Risikoindex als einen Momentanwert einer Risikofunktion abhängig von der Winkelgeschwindigkeit, wobei die Einrichtung insbesondere dazu geeignet ist, ein Verfahren zum Prognostizieren des Fallens gemäß einem der Ansprüche 1 bis 12 zu implementieren.

16. Vorrichtung nach einem der Ansprüche 13 bis 15, wobei die Messeinrichtung drei Kreisel mit zwei Freiheitsgraden aufweist, die geeignet sind, die Winkelgeschwindigkeit gemäß drei zueinander orthogonalen Achsen zu messen.

17. Vorrichtung nach einem der Ansprüche 13 bis 16, wobei die Messeinrichtung zumindest einen Beschleunigungsmesser aufweist, der geeignet ist, die lineare Beschleunigung der Person oder des Fahrzeugs oder dergleichen zu messen.

18. Vorrichtung nach Anspruch 17, wobei die Messeinrichtung drei Beschleunigungsmesser aufweist, die geeignet sind, die lineare Beschleunigung gemäß drei zueinander orthogonaler Achsen zu messen.

**Revendications**

1. Procédé de prédiction de la chute d'une personne d'un véhicule ou similaire, comprenant les étapes consistant à :

(a) mesurer au moins une composante de la vitesse angulaire de la personne ou du véhicule ou similaire ; et
(b) calculer un indice de risque comme valeur instantanée d'une fonction de risque qui dépend de ladite vitesse angulaire,

**caractérisé en ce que** ladite fonction de risque comprend

- un terme énergétique associé à l'énergie cinétique de la personne ou du véhicule ou similaire, ledit terme énergétique comprenant une combinaison linéaire du carré d'au moins deux composantes de ladite vitesse angulaire, ou
- un terme dérivé associé à la dérivée de ladite vitesse angulaire, ledit terme dérivé comprenant une combinaison linéaire du carré de la dérivée d'au moins deux composantes de ladite vitesse angulaire, ou
- une combinaison du terme énergétique et du terme dérivé.

2. Procédé selon la revendication 1, dans lequel ladite étape (a) prévoit la mesure des composantes de ladite vitesse angulaire selon trois axes mutuellement orthogonaux.

3. Procédé selon la revendication 2, dans lequel ledit terme énergétique est du type :

$$\mathrm{RISK_{ene}} = \left( \sqrt{w_{gx\_ene} \cdot GX^2 + w_{gy\_ene} \cdot GY^2 + w_{gz\_ene} \cdot GZ^2} \right),$$

où $\mathrm{RISK_{ene}}$ indique ledit terme énergétique, GX, GY et GZ indiquent lesdites composantes de la vitesse angulaire et $w_{gx\_ene}$, $w_{gy\_ene}$ et $w_{gz\_ene}$ indiquent les pondérations respectives au sein de la combinaison linéaire.

**4.** Procédé selon l'une quelconque des revendications précédentes, dans lequel ladite fonction de risque prévoit l'application d'un filtre médian ou d'un filtre à moyenne mobile à un terme lié à une combinaison linéaire du carré d'au moins deux composantes de ladite vitesse angulaire, ledit filtre étant appliqué par rapport à un nombre prédéfini de mesures successives desdites au moins deux composantes de ladite vitesse angulaire.

**5.** Procédé selon les revendications 2 et 4, dans lequel ledit terme filtré est du type :

$$\mathrm{RISK_{med}} = medfilt_{\mathrm{Nputs}} \left( \sqrt{w_{gx\_med} \cdot GX^2 + w_{gy\_med} \cdot GY^2 + w_{gz\_med} \cdot GZ^2} \right),$$

où $\mathrm{RISK_{med}}$ indique ledit terme filtré, GX, GY et GZ indiquent lesdites composantes de la vitesse angulaire et $w_{gx\_med}$, $w_{gy\_med}$ et $w_{gz\_med}$ indiquent les pondérations respectives au sein de la combinaison linéaire, *medfilt* indique ledit filtre et Nputs indique ledit nombre prédéfini de mesures successives.

**6.** Procédé selon la revendication 2, dans lequel ledit terme dérivé est du type :

$$\mathrm{RISK_{dot}} = \left( \sqrt{w_{gx\_dot} \cdot \left(GX_{dot}\right)^2 + w_{gy\_dot} \cdot \left(GY_{dot}\right)^2 + w_{gz\_dot} \cdot \left(GZ_{dot}\right)^2} \right)$$

où $\mathrm{RISK_{dot}}$ indique ledit terme dérivé, $GX_{dot}$, $GY_{dot}$ et $GZ_{dot}$ indiquent chacune des dérivées par rapport au temps d'une composante respective de la vitesse angulaire, et $w_{gx\_dot}$, $w_{gy\_dot}$ et $w_{gz\_dot}$ indiquent les pondérations respectives au sein de la combinaison linéaire.

**7.** Procédé selon la revendication 6, dans lequel ladite fonction de risque prévoit l'application d'un filtre médian ou d'un filtre à mobile moyenne audit terme dérivé, ledit filtre étant appliqué par rapport à un nombre prédéfini de mesures successives desdites composantes de ladite vitesse angulaire.

**8.** Procédé selon l'une quelconque des revendications précédentes, qui prévoit une étape de comparaison de la valeur dudit indice de risque avec un seuil prédéfini.

**9.** Procédé selon la revendication 8, dans lequel un signal d'activation est émis lorsqu'une valeur instantanée dudit indice de risque devient égale et/ou supérieure audit seuil prédéfini pendant une période de temps prédéfinie.

**10.** Procédé selon la revendication 8, dans lequel un signal d'activation est émis lorsque la période de temps totale pendant laquelle une valeur instantanée dudit indice de risque reste globalement égale et/ou supérieure audit seuil prédéfini dépasse un premier seuil de durée prédéfini sans que ladite valeur instantanée de l'indice de risque reste en continu inférieure audit seuil prédéfini pendant une période de temps supérieure à un second seuil de durée prédéfini.

**11.** Procédé selon l'une quelconque des revendications précédentes, qui prévoit également une étape de mesure d'au moins une composante d'accélération linéaire de la personne ou du véhicule ou similaire.

**12.** Procédé selon l'une quelconque des revendications précédentes, qui prévoit, avant le calcul dudit indice de risque, une étape de pré-filtrage du/des signal/signaux acquis.

**13.** Dispositif de prédiction de la chute d'une personne d'un véhicule ou similaire, qui peut être monté sur le corps de ladite personne et qui comprend :

- un moyen de mesure d'au moins une paire de composantes de la vitesse angulaire de la personne selon deux axes mutuellement orthogonaux ; et
- un moyen de détermination d'un indice de risque comme valeur instantanée d'une fonction de risque qui dépend de ladite vitesse angulaire, ledit moyen convenant particulièrement pour mettre en oeuvre un procédé de prédiction de chute selon l'une quelconque des revendications 1 à 12.

**14.** Dispositif selon la revendication 13, dans lequel ledit dispositif est monté au niveau de la crête aérodynamique de la tenue d'un motard.

**15.** Dispositif de prédiction de la chute d'une personne d'un véhicule ou similaire, qui peut être monté intégralement sur un véhicule et qui comprend :

- un moyen de mesure d'au moins une paire de composantes de la vitesse angulaire du véhicule selon deux axes mutuellement orthogonaux ; et
- un moyen de détermination d'un indice de risque comme valeur instantanée d'une fonction de risque qui dépend de ladite vitesse angulaire, ledit moyen convenant particulièrement pour mettre en oeuvre un procédé de prédiction de chute selon l'une quelconque des revendications 1 à 12.

**16.** Dispositif selon l'une quelconque des revendications 13 à 15, dans lequel ledit moyen de mesure comprend trois gyroscopes capables de mesurer ladite vitesse angulaire selon trois axes mutuellement orthogonaux.

**17.** Dispositif selon l'une quelconque des revendications 13 à 16, dans lequel ledit moyen de mesure comprend au moins un accéléromètre capable de mesurer l'accélération linéaire de la personne ou du véhicule ou similaire.

**18.** Dispositif selon la revendication 17, dans lequel ledit moyen de mesure comprend trois accéléromètres capables de mesurer ladite accélération linéaire selon trois axes mutuellement orthogonaux.

**FIG. 1**

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10316766 A